# EUROPEAN PATENT APPLICATION

(11) **EP 2 502 754 A1**
(43) Date of publication of application: **26.09.2012**
(21) Application number: 12160894.7
(22) Date of filing: 22.03.2012
(51) Int. Cl.: B60B 5/02, B60B 21/06

(54) **A wheel rim and a method for its manufacture**

(30) Priority: 23.03.2011 IT RM20110141
(71) Applicant: Alter Ego S.a.s., 00194 Roma (IT)
(72) Inventor: Hohenegger, Alexander, 00152 ROMA (IT)
(74) Representative: Locas, Davide

(57) **Abstract**

In a rim (4) of a spoked wheel (1), formed by a superimposition of fibre layers, two rim-like half-structures (6), each one formed by a superimposition of fibre layers, are joined along a circumferential line by the union of the respective facing inner margins (7), each inner margin (7) having a plurality of recesses (8) of appropriate shape, which, on completion of the joining, form suitable seats (9) for receiving respective spoke heads (5).

## Description

The present invention relates to a rim of a spoked wheel, for example a wheel of a two-, three- or four-wheeled vehicle such as a motorcycle, and to a method for manufacturing the rim, wherein a superimposition of layers made of fibre, for example carbon fibre, is used to produce a particularly strong and light structure.

"poked wheel" denotes a wheel wherein the connection between the wheel hub and the rim is made by a plurality of spokes composed of wire-like bars in a simple radial arrangement or in an arrangement which is inclined with respect to the radial lines and/or with respect to the circumferential plane of symmetry.

The spoked structure is a solution which provides considerable structural lightness and is more flexible and capable of withstanding stresses imparted by the road.

However, wheels for motor vehicles and bicycles require a plurality of mechanical connections for fastening the spokes to the hub and to the rim. In particular, the rim has a plurality of bored seats for the fastenings, and must therefore have a strong and consequently heavy structure, which at least partially nullifies the advantageous effects of using the spokes.

For this reason, motor cycle and bicycle wheels commonly use solutions other than spoked structures, particularly radial arm connections and lenticular structures.

In order to lighten the rim a proposal has been made to use a system of manufacturing in fibre, particularly carbon fibre, by superimposing a plurality of layers in a mould to produce the shape of the rim.

For example, German utility model DE 10 2006 010 445 describes a rim formed from half-structures made from a series of fibre layers. This intrinsically lighter and very strong solution can decrease the rotational inertia of the rim considerably, but suffers from a further drawback in that, in order to make the aforesaid bored seats, the superimposition must be pierced, thereby weakening the fibre structure. Owing to the mechanical stresses in the bored seats and the contact with the metal spoke head, this can lead to tearing and rupture.

The technical problem which is addressed by the present invention is constituted by the drawbacks mentioned with reference to the description of the prior art.

This problem is resolved by a rim made in accordance with the following claims.

The same problem is also resolved by the method of manufacturing the rim, as defined in the corresponding claims regarding the method. The rim for a spoked wheel and the corresponding manufacturing method are such that the fibre structure resulting from the joining is not pierced at the positions of the seats for the ends of the spokes, thus ensuring that the structure does not suffer from tears caused by the ends of the spokes in their seats.

It is to be understood that the aforesaid cavities will be produced during the modelling of the half-structure of the rim.

Each half-structure can therefore be produced in a suitable mould, or both the half-structures, in other words the whole rim, can be assembled in a single solution with two adjacent superimpositions arranged in the same device for moulding the fibre structure. Furthermore, the joining of the two half-structures can take place separately from the forming of the half-structures, by means of bonding or mechanical fastening, or during the step of forming in the aforesaid moulding device.

Conveniently, the bored seats can be formed by through holes passing through the thickness of the rim, so as to allow the spokes and any corresponding fastening bushes to be inserted through the outer face of the rim.

The through holes are then covered by a circular band which is also bored at the positions of the seats to permit the maintenance of the spokes.

These exemplary embodiments of the invention are described below purely by way of non-limiting example, with reference to the appended drawings, in which
- Figure 1 is partially exploded perspective view from the front of a spoked wheel which comprises a rim according to a first exemplary embodiment of the present invention;
- Figure 2 shows a perspective view from the front of the wheel of Figure 1, with the two half-structures united;
- Figure 3 shows a side view of the wheel of Figure 1, with a diagram illustrating the procedure for superimposing the fibre layers of the half-structures of the aforesaid rim in the manufacturing method according to the invention;

- Figure 4 is an enlarged perspective view in partial section of a detail of the wheel of Figure 1;
- Figure 5 is a side view of a generic spoked wheel which comprises a rim according to the present invention;
- Figures 5A and 5C show respective radial sections through the rim of Figure 5, illustrating a second exemplary embodiment of the rim according to the invention;
- Figures 5B and 5D show respective radial sections through the rim of Figure 5, illustrating a third exemplary embodiment of the rim according to the invention;
- Figure 6 shows schematically a cross section of an element for retaining the end of a spoke, which can be used in the context of the present invention; and
- Figures 7A and 7B show respective detailed radial sections through the rim, illustrating a third and a fourth exemplary embodiment of the rim according to the invention, using the element of Figure 6.

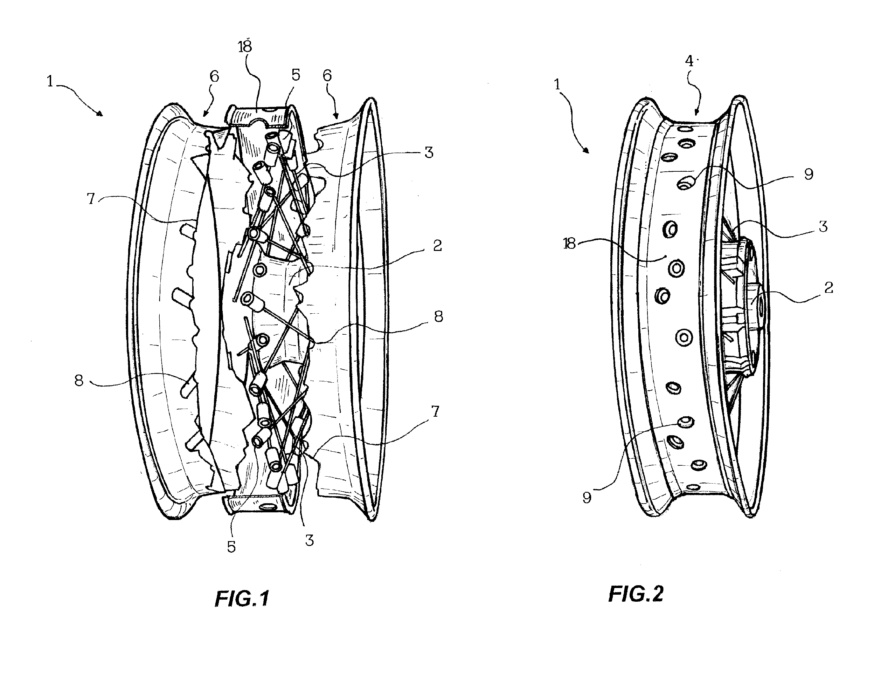

With reference to Figures 1 to 4, a spoked wheel is indicated as a whole by 1, and is of the type suitable for use on a motorcycle.

It generally comprises a hub 2, a plurality of spokes 3 of the shaft type, in other words spokes composed of wire-like metal bars with respective fastening heads forming the ends of each spoke, and a rim indicated as a whole by 4, adapted to hold a tyre which is preferably, but not exclusively, of the tubeless type and therefore provided with a suitable profile on its outer face.

The fastening heads of the spokes 3 are indicated by 5, and are each provided with a suitable fastening bush 15 which can be housed in a corresponding bored seat.

The rim 4 comprises two rim-like half-structures 6, joined along a circumferential line. The two half-structures are substantially mirror images of each other and, in the present example, form the body of the rim 4 as a result of their joining.

The two half-structures 6 are then joined by uniting the respective facing inner margins 7.

This joining can carried out mechanically, or, preferably, and in accordance with the present example, by means of hot bonding and with suitable joining pressure at the union of the inner margins.

Each half-structure 6 is formed by a respective superimposition of layers of fibre, particularly carbon fibre, which provide an optimal compromise between strength and lightness.

Each half-structure 6 can be produced in a suitable mould, or both the half-structures 6, in other words the whole rim 4, can be assembled in a single solution in a single moulding device with two adjacent superimpositions, the joining being carried out at the same time.

In the example according to the invention, each inner margin 7 of the half-structures 6 has a plurality of radial recesses 8, each having an appropriate shape.

The shape and arrangement of the recesses are such that, on completion of the joining operation, their joining forms suitable seats 9 for housing the respective spoke heads 5, or the fastening bushes 15. In this example, the bored seats 9 are formed by through holes passing through the thickness of the rim 4, so as to allow the spokes 3 and any corresponding fastening bushes 15 to be inserted through the outer face of the rim 4.

As can be seen in Figures 1, 2 and 4, the recesses 8 have a cross section, in other words a section taken in a plane normal to an axial development direction of the spoke head, with an open profile, whereas the seats 9 which they form when joined have a section in this plane with a close profile. Clearly, the axial direction of the head coincides in the present embodiment with the axis of the radius, but other embodiments can be provided, in which the axial direction is, for example, identified by the direction of insertion of the spoke head into the respective seat.

Thus the recesses can be made without boring operations on the rim but simply by the suitable modelling of the mould by means of which each half-structure 6 is made.

In Figures 1 and 2 it can also be seen that the circumferential joining line between the two half-structures 6 is not circular but irregular, so that the resulting bored seats 9 are offset from each other and from a median circumferential line.

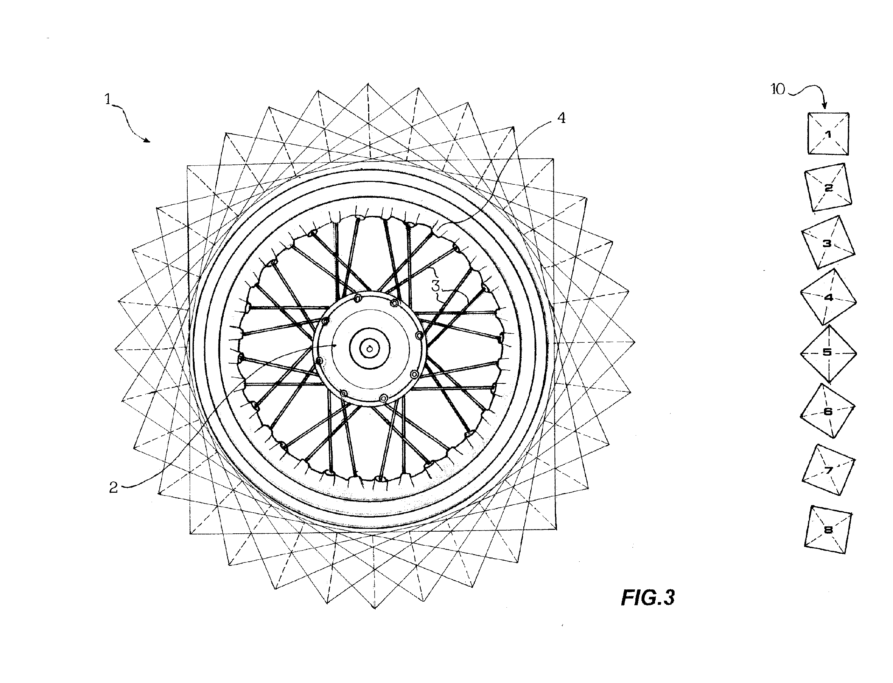

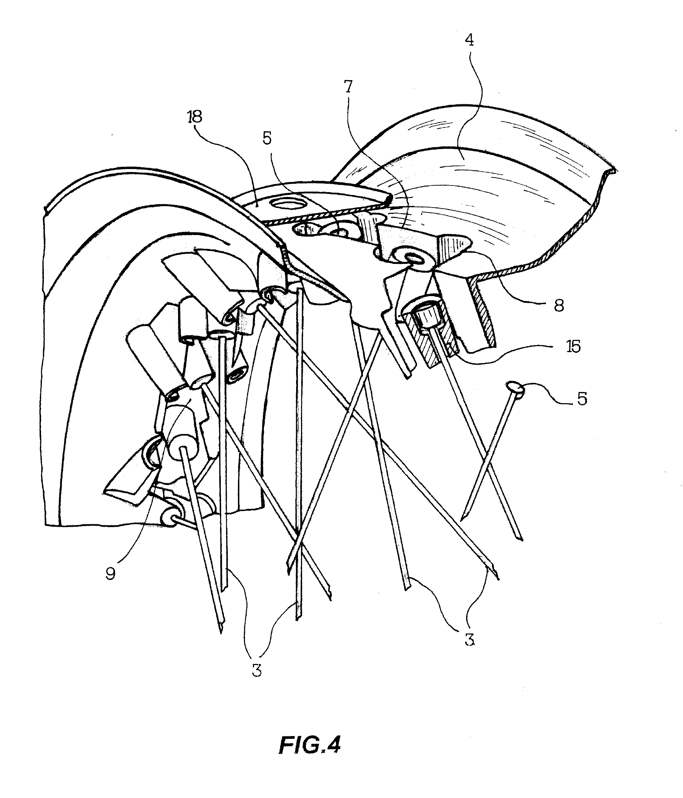

With reference to Figures 3 and 4, the spokes 3 are not arranged in a radial arrangement but are inclined, and consequently the bored seats formed by the joining are also conveniently inclined with respect to the corresponding radial lines, in such a way that the spokes are arranged in a configuration which is substantially or partially tangential to the hub 2. Thus the spokes 3 operate in tension.

In the present example, the spokes 3 are grouped in groups of four, which are repeated eight times; the groups are equally spaced angularly from each other and their arrangement is such that the bored seats 9 in the rim 4 are also equally spaced angularly from each other.

In order to achieve the best possible uniformity in each superimposition of layers, a number of layers equal to a divisor of the number of seats is superimposed. The term "divisor" denotes a number such that, when number of seats is divided by it, the result is an integer.

In the present example, there are thirty-two seats and the chosen number of layers is eight. In a variant, there may be twenty-eight spokes 3 and twenty-eight seats 9, in seven groups of four spokes each. In this case, there may be seven layers.

Advantageously, the arrangement of the layers can have an angular offset between adjacent layers equal to one revolution (360°) divided by the number of bored seats 9.

In the present example, since there are thirty-two seats, the angular offset is 11.25°, and this can be achieved with eight layers each composed of a square fabric piece 10 as shown at the side of Figure 3. Advantageously, the square fabric pieces 10 are arranged in such a way that each seat corresponds to a vertex of a fabric piece (Figure 3) in such a way that the fibres of each layer can never be superimposed on the fibres of other layers, but all the fibres of each layer 10 have different inclinations from the others.

Thus the local deformations of the superimposition of fabric pieces 10 at each seat are equal from one seat to another and therefore create the greatest possible uniformity in the corresponding half-structure.

If there were twenty-eight spokes, the layers used could be offset by 12.86° from each other.

In the present exemplary embodiment, therefore, it is possible to use eight layers of carbon fibre so as to produce a thickness in the region of 2.5 mm for each half-structure, which would have a weight of about 0.76 kg with a radius in the region of 21.6 cm.

However, it should be understood that the system of superimposition of the fabric pieces described above should not be considered limiting on the construction of the rim in question. Other systems of superimposing the layers, in which, for example, there is less wastage of fabric cut off at the margins, can be considered equally suitable.

If fastening bushes 15 of aluminium or other compression-resistant material are used, with a hub of a substantially conventional type, the total weight of the wheel could be in the range from 2.5 kg to 3.0 kg, with all the necessary structural strength retained and with the weight saving concentrated at the circumference of the wheel, thus minimizing the rotational inertia and therefore the gyroscopic effect which retards changes of direction.

The bored through seats 9 are covered by a circular band 18 which covers the outer face of the rim 4.

This band 18 can also be made of carbon fibre and can be bonded on to the outer face of the rim 4, particularly in the central portion of the outer face of the rim 4 formed by the union of the two half-structures, thus contributing to the strengthening of the union, by resisting the separating force exerted by the tyre.

It should be understood that the band 18 also has through holes to allow access to the bored seats 9, in order to enable each spoke 3 to be extracted for maintenance or replacement.

The band 18 is suitable for being bored directly, because, unlike the rim 4, it does not have to withstand forces due to the spokes 3 and their heads 5.

The band 18 can therefore be pre-bored or bored after its application to the outer face. The application can take place after the joining of the two half-structures 6 or at the same time.

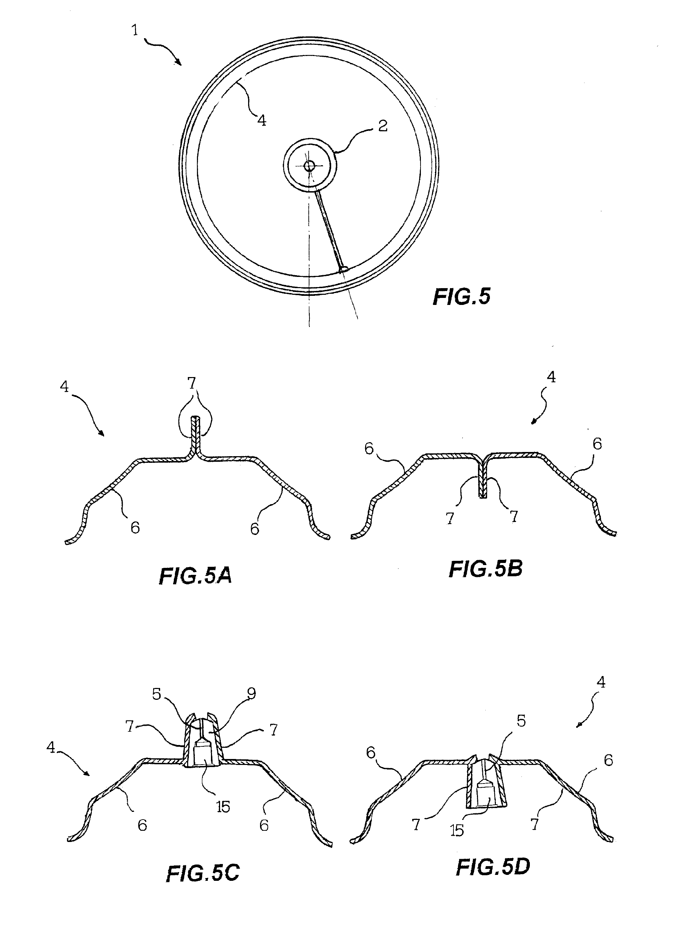

With reference to Figures 5 to 5D, two different methods of joining the two half-structures 6 are illustrated.

In the first example (Figures 5A and 5C), the inner margins 7 of the two half-structures are turned over towards the inside of the rim towards the hub, in such a way that a greater surface area of the two half-structures can be joined.

The bored seats 9 are produced by suitable modelling of the turned-over margins to produce said cavities.

In the second example (Figures 5B and 5D), the inner margins 7 of the two half-structures are turned over towards the outside of the rim into the tyre channel, again in such a way that a greater surface area of the two half-structures can be joined.

In this case also, the bored seats 9 are produced by suitable modelling of the turned-over margins to produce said cavities.

The shape of the bored seats produced in this way can therefore be ogival.

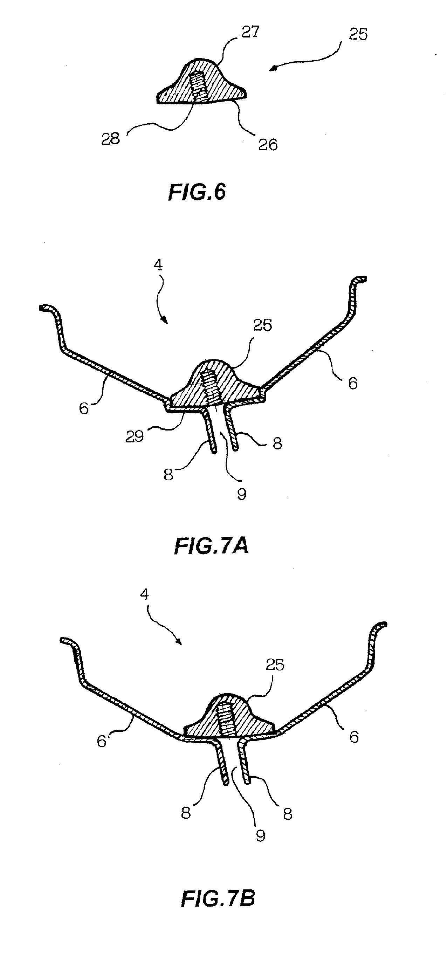

With reference to Figure 6, a particular fastening bush 25 which serves to fasten the end head 5 of each spoke is illustrated, and replaces those described previously.

This bush is shaped like a small disc, with a bearing base 26 complementary to the shape of the corresponding portion of rim and an upper dome 27. The bush 25 has a threaded seat 28 adapted to accommodate an end head of a spoke 3 (not shown) which is also threaded.

With reference to Figures 7A and 7B, two further exemplary embodiments use the fastening bush 25 described above.

In the fourth embodiment (Figure 7A), a recess 29 is provided to accommodate the bush 25 on the margins 8 of the two half-structures 6, which are turned over as in the example of Figure 5B.

The fifth example (Figure 7B) is similar to the preceding one but there is no recess 29, the bearing base 26 bearing directly on the outer face of the rim 4.

In both of the last two examples, the size of the bored hole 9 is minimized, this hole having the sole purpose of allowing the passage of the respective spoke 3. Although the recess 26 makes the moulding process slightly more complicated, it prevents the bush 25 from revolving about its own axis, in order to enable the spoke to be replaced without dismantling the wheel itself.

It should be understood that, although the preferred example in the application described above uses carbon fibre, the same advantages can also be obtained by using different impregnated fibres such as glass fibre, Kevlar or any aramid fibre.

It should also be understood that, in all the examples described above, the bored seats 9 will be airtight when engaged by the heads 5 of the spokes 3 and by the respective bushes 15, 25 at least to the extent that the rim 4 is engaged by a tyre of the tubeless type.

The rim for a spoked wheel described above, the spoked wheel comprising the rim, and the method of manufacturing the rim can be modified and varied in any way by a person skilled in the art provided that such modification or variation lies within the protective scope of the present invention as defined by the appended claims.

## Claims

1. A rim (4) of a spoked wheel (1), wherein a superimposition of fibre layers is used and comprising two rim-like half-structures (6), each one formed by a superimposition of fibre layers, joined along a circumferential line by the union of the respective facing inner margins (7), each inner margin (7) having a plurality of recesses (8), **characterized in that** the recesses (8) are shaped in a such way that when a recess (8) of a half-structure (6) is joined to a corresponding recess (8) of the other half-structure (6) seats (9) suitable for receiving respective spoke heads (5) are defined, and **in that** the recesses (8) have an open profile cross section on a plane normal to an axial development direction of the spoke head and the seats (9) have a closed profile cross section on this plane.

2. A rim (4) according to Claim 1, wherein the bored seats (9) are inclined with respect to the corresponding radial lines.

3. A rim (4) according to Claim 1 or 2, wherein the superimposition of layers is produced by superimposing a number of layers equal to a divisor of the number of bored seats (9).

4. A rim (4) according to Claim 3, wherein the arrangement of superimposed fibre layers has an angular offset, between adjacent layers, equal to one revolution (360°) divided by the number of bored seats (9).

5. A rim (4) according to any of the preceding claims, wherein the inner margin (7) of the two half-structures (6) is turned over towards the inside of the rim (4) towards the hub (2), the bored seats (9) being produced by suitably modelling the turned-over margins (7) to produce said cavities (8).

6. A rim (4) according to Claim 5, wherein the outer face of the rim (4) is adapted to receive and support a fastening bush (25) on a flat support base thereof (26), the fastening bush (25) comprising a threaded seat which is formed in the bush or inserted into it.

7. A rim (4) according to any of Claims 1 to 4, wherein the inner margin (7) of the two half-structures (6) is turned over towards the outside of the rim (4) into the tyre channel, the bored seats (9) being produced by suitably modelling the turned-over margins (7) to produce the recesses (8).

8. A rim (4) according to any of the preceding claims, wherein the through bored seats (9) are covered by a circular band (18) covering the outer face of the rim (4).

9. A spoked wheel (1), comprising a rim (4) according to any of the preceding claims.

10. A wheel (1) according to Claim 14, wherein the heads (5) for fastening the spokes (3) are provided with a suitable fastening bush (15), adapted to be placed at a respective bored seat (9).

11. A method for manufacturing rims of spoked wheels, comprising the steps of:
• assembling a plurality of fibre layers so as to make two rim-like half-structures (6) in such a way that a plurality of recesses (8) of appropriate shape is formed on a margin (7) of each half-structure (6); and
• joining the rim-like half-structures (6) at the margins (7), so as to produce, by bringing the recesses (8) together, a respective plurality of seats (9) for spoke heads (5),
the recesses (8) having an open profile cross section on a plane normal to an axial development direction of the spoke head profile, and the seats (9) having a closed profile cross section on said plane.

12. A method according to Claim 11, wherein the joining step takes place by means of hot bonding and with suitable joining pressure at the union of the inner margins.

13. A method according to Claim 11 or 12, wherein the assembly of the fibre layers is carried out by superimposing a number of layers equal to a divisor of the number of bored seats.

14. A method according to any of Claims 11 to 13, wherein the arrangement of the layers has an angular offset, between adjacent layers, equal to one revolution (360°) divided by the number of bored seats (9).

15. A method according to any of Claims 11 to 14, wherein said layers, made from square fabric pieces, are arranged in such a way that each seat is at one vertex of a fabric piece.
